Europäisches Patentamt

European Patent Office

Office européen des brevets

(11) Publication number: **0 295 020**
**A1**

## (12) EUROPEAN PATENT APPLICATION

(21) Application number: **88305105.4**

(22) Date of filing: **03.06.88**

(51) Int. Cl.⁴: **B01J 29/38** , **B01J 29/06**

(30) Priority: **11.06.87 US 60542**

(43) Date of publication of application:
**14.12.88 Bulletin 88/50**

(84) Designated Contracting States:
**AT BE DE FR GB IT NL SE**

(71) Applicant: **MOBIL OIL CORPORATION**
**150 East 42nd Street**
**New York New York 10017(US)**

(72) Inventor: **Chang, Clarence Dayton**
**11 Murray Place**
**Princeton New Jersey 08540(US)**
Inventor: **Pelrine, Bruce Patrick**
**4 Courier Way**
**Trenton New Jersey(US)**
Inventor: **Han, Scott**
**4 Valerie Lane**
**Lawrenceville New Jersey 08648(US)**

(74) Representative: **Colmer, Stephen Gary**
**Patent Department c/o Mobil Services**
**Company Limited Mobil Court 3 Clements**
**Inn**
**London WC2A 2EB(GB)**

(54) Activation of zeolites.

(57) Zeolitic catalysts containing framework displaced aluminum, e.g., steamed or spent catalysts, are activated by contact with aqueous fluoride solution under mild conditions. The treatment can enhance catalytic activity and ion-exchange capacity by replacing aluminum in the zeolitic framework.

EP 0 295 020 A1

## ACTIVATION OF ZEOLITES

This invention relates to a method for activating a catalyst composition comprising a framework aluminum-deficient crystalline zeolite. Zeolites deactivated by steam or hydrocarbon conversion processes are particularly suited to activation by the method of the present invention.

Zeolitic materials, both natural and synthetic, have been demonstrated in the past to have catalytic properties for various types of hydrocarbon conversion. Certain zeolitic materials are ordered, porous, crystalline aluminosilicates having a definite crystalline structure as determined by X-ray diffraction, within which there are a large number of smaller cavities which may be interconnected by a number of still smaller channels or pores. These cavities and pores are uniform in size within a specific zeolitic material. Since the dimensions of these pores are such as to accept for adsorption molecules of certain dimensions while rejecting those of larger dimensions, these materials have come to be known as "molecular sieves" and are utilized in a variety of ways to take advantage of these properties.

Such molecular sieves, both natural and synthetic, include a wide variety of positive ion-containing crystalline aluminosilicates. These aluminosilicates can be described as a rigid three-dimensional framework of $SiO_4$ and $AlO_4$ in which the tetrahedra are cross-linked by the sharing of oxygen atoms whereby the ratio of the total aluminum and silicon atoms to oxygen atoms is 1:2. The electrovalence of the tetrahedra containing aluminum is balanced by the inclusion in the crystal of a cation, for example an alkali metal or an alkaline earth metal cation. This can be expressed wherein the ratio of aluminum to the number of various cations, such as Ca/2, Sr/2, Na, K or Li, is equal to unity. One type of cation may be exchanged either entirely or partially with another type of cation utilizing ion exchange techniques in a conventional manner. By means of such cation exchange, it has been possible to vary the properties of a given aluminosilicate by suitable selection of the cation.

Prior art techniques have resulted in the formation of a great variety of synthetic zeolites. The zeolites have come to be designated by letter or other convenient symbols, as illustrated by zeolite A (U.S. Pat. No. 2,882,243), zeolite X (U.S. Pat. No. 2,882,244), zeolite Y (U.S. Pat. No. 3,130,007), zeolite beta (U.S. Pat. No. 3,308,069), zeolite ZK-5 (U.S. Pat. No. 3,247,195), zeolite ZK-4 (U.S. Pat. No. 3,314,752), zeolite ZSM-5 (U.S. Pat. No. 3,702,886), zeolite ZSM-23 (U.S. Pat. No. 4,076,842), zeolite ZSM-11 (U.S. Pat. No. 3,709,979), zeolite ZSM-12 (U.S. Pat. No. 3,832,449), zeolite ZSM-20 (U.S. Pat. No. 3,972,983) ZSM-35 (U.S. Pat. No. 4,016,245), and zeolite ZSM-48 (U.S. Pat. No. 4,375,573), merely to name a few.

The silicon/aluminum atomic ratio of a given zeolite is often variable. For example, zeolite X can be synthesized with silicon/aluminum atomic ratios of from 1 to 1.5; zeolite Y, from 1.5 to about 3. In some zeolites, the upper limit of the silicon/aluminum atomic ratio is unbounded. ZSM-5 is one such example wherein the silicon/aluminum atomic ratio is at least 2.5 and up to infinity. U.S. Pat. No. 3,941,841 (Re. 29,948) discloses a porous crystalline silicate made from a reaction mixture containing no deliberately added aluminum in the recipe and exhibiting the X-ray diffraction pattern characteristic of ZSM-5 type zeolites. U.S. Pat. Nos. 4,061,724, 4,073,865 and 4,104,294 describe crystalline silicas of varying aluminum and metal content.

When zeolitic catalysts are utilized in organic conversion processes their catalytic activity is often diminished when they are subjected to deactivating conditions such as steaming or oxygen regeneration which are believed to result in displacement of aluminum from the zeolite framework. Highly siliceous aluminosilicate zeolites are particularly susceptible to such deactivation because they initially contain only relatively small amounts of aluminum in the framework. Accordingly, the present invention while suitable for aluminosilicates in general, is particularly useful in the activation of highly siliceous zeolites, i.e., zeolites having a silica to alumina molar ratio of at least 4, preferably at least 12, say, at least 100.

Methods for enhancing the catalytic activity of zeolitic materials including treatments involving fluorine, are well known. U.S. Patent No. 4,444,902 relates to a process for enhancing acidic activity of a highly siliceous zeolite by contact with aluminum fluoride followed by ammonium exchange and calcination. U.S. Patent No. 4,427,787 teaches zeolite activation by contacting an alumina-composited zeolite with hydrogen fluoride. Ammoniacal aluminum fluoride is taught as a reagent for zeolite activation in U.S. Patent No. 4,427,788 while U.S. Patent No. 4,427,789 treats alumina-composited zeolite with alkali metal fluoride. U.S. Patent No. 4,427,790 discloses enhancing zeolite activity by treatment with a compound of the formula $L_{(n-m)}[MF_n]_e$ wherein L is an organic or inorganic ionic moiety $[MF_n]$ is a fluoroanion moiety wherein M is a Group VB, VIB, VIIB, VIII, IIIA, IVA or VA element, n is the coordination number of M, m is the valance of M and e is the charge associated with L. U.S. Patent No. 4,427,786 teaches the use of boron fluoride in activating an alumina- or gallia-supported zeolite. All of the above references utilize added aluminum or other activating elements in activating zeolites.

The present invention resides in a method for activating a catalyst composition comprising a framework aluminum-deficient crystalline aluminosilicate zeolite containing non-framework aluminum which comprises contacting said catalyst composition at a temperature of 20 to 100°C for 0.1 to 48 hours, with a dilute aqueous fluoride solution of from 0.001 to 0.1 N (equivalents of fluoride ion/liter), said solution being essentially free of zeolite framework substituting atoms, wherein said catalyst composition treated by said method has been previously utilized in an organic conversion or contacted with steam under conditions sufficient to deactivate said composition by removal of aluminum from said zeolite framework.

In one aspect, the zeolite catalyst composition treated by the method of the present invention is one which has been previously utilized in an organic feedstock to hydrocarbon conversion under conditions sufficient to deactivate said composition by removal of aluminum from the zeolite framework so as to render the framework aluminum-deficient. In another aspect of the invention, the catalyst composition treated by the present method is one which has been previously contacted with steam under conditions sufficient to deactivate the composition by removal of aluminum from the zeolite framework. Such deactivation can occur under conditions of 260 to 930°C (500 to 1700°F), for less than 1 hour to 1 week, at 50 ppm $H_2O$ to 1 atm $H_2O$ (100 kPa $H_2O$), and an overall pressure of less than 100 kPa to $3 \times 10^5$ kPa (less than 1 atm pressure to 3000 atm).

The zeolite used in the catalyst composition treated by the method of the invention may be a large pore size zeolite having a constraint index (as described in US Patent No. 4,016,218) of less than 1, e.g., zeolites X, Y, mordenite, Ultrastable Zeolite Y (USY) and ZSM-20), or may be an intermediate pore size zeolite having a constraint index of about 1 to 12, e.g., ZSM-5, ZSM-5/ZSM-11 intermediate, ZSM-12, ZSM-23, ZSM-35, ZSM-38 and ZSM-48.

The catalyst composition treated by the method of the invention may comprise the framework aluminum-deficient zeolite alone or in combination with a matrix material resistant to the temperature and other conditions employed in chemical conversion processes. Such a matrix material is useful as a binder and imparts greater resistance to the catalyst for the severe temperature, pressure and reactant feed stream velocity conditions encountered in many processes, such as, for example, cracking. Useful matrix materials include both synthetic and naturally occurring substances, as well as inorganic materials such as clay, silica and/or metal oxides such as alumina. The latter may be either naturally occurring or in the form of gelatinous precipitates or gels including mixtures of silica and metal oxides. Naturally occurring clays which can be composited with the zeolite include those of the montmorillonite and kaolin families, which families include the sub-bentonites and the kaolins commonly known at Dixie, McNamee, Georgia and Florida clays or others in which the main mineral constituent is halloysite, kaolinite, dickite, nacrite or anauxite. Such clays can be used in the raw state as originally mined or initially subjected to calcination, acid treatment or chemical modification.

In addition to the foregoing materials, the zeolites employed herein may be composite with a porous matrix material, such as silica-alumina, silica-magnesia, silica-zirconia, silica-thorida, silica-beryllia, and silica-titania, as well as ternary compositions, such as silica-alumina-thoria, silica-alumina-zirconia, silica-alumina-magnesia and silica-magnesia-zirconia. The matrix may be in the form of a cogel. The relative proportions of zeolite component and inorganic matrix, on an anhydrous basis, may vary widely with the zeolite content ranging from 1 to 99 percent by weight and more usually in the range of from 5 to 80 percent by weight of the dry composite.

The aqueous fluoride solution employed in the present invention contains no intentionally added source of framework substituting atoms and can be prepared from a fluoride compound selected from the group consisting of a metal fluoride ($MF_n$, where n is the valence of the metal M), ammonium fluoride ($NH_4F$), hydrofluoric acid (HF), and ammonium hydrogen fluoride ($NH_4F \cdot HF$), preferably ammonium hydrogen fluoride. The presence of framework substituting atoms is not required insofar as the present invention utilizes non-framework aluminum already present in the zeolite as an activating metal.

The fluoride solution employed in the method of the invention has an acidic character. The initial pH thereof may range of 0.1 to 6, preferably 2 to 4, whereas by the end of the fluoride contacting step it may increase to a pH between 2 to 8, preferably between 4 to 7. Activation is effected by contacting the deactivated catalyst composition with the fluoride solution under mild conditions, namely, a temperature of 20 to 100°C, preferably 60 to 95°C, for 0.1 to 48 hours, preferably 6 to 18 hours. The fluoride solution contacted catalyst composition may then be contacted with an aqueous ammonium ion solution of from 0.05N to 5N, preferably 0.5 to 2.0 N, at a temperature of from 20°C to 100°C, preferably 25 to 50°C, for a period sufficient to effect ammonium exchange, say 0.25 to 6 hours, preferably 0.5 to 3 hours. The aqueous ammonium ion solution contacted catalyst composition may then be calcined at a temperature of from 200 to 600°C, preferably 500 to 550°C, for 1 minute to 48 hours, preferably 0.5 to 6 hours, in order to convert the zeolite to the catalytically-active hydrogen form.

Treatment with the dilute aqueous fluoride solution by the present invention is found to enhance catalytic activity, Bronsted acidity and ion exchange capacity. The treatment is particularly useful for reactivation of spent ZSM-5 dewaxing catalyst.

In order to more fully illustrate the nature of the invention and the manner of practicing same, the following examples are presented. In the examples, whenever Alpha Value is examined, it is noted that the Alpha Value is an approximate indication of the catalytic cracking activity of the catalyst compared to a standard catalyst and it gives the relative rate constant (rate of normal hexane conversion per volume of catalyst per unit time). It is based on the activity of the highly active silica-alumina cracking catalyst taken as an Alpha of 1 (Rate Constant = 0.016 sec $^{-1}$). The Alpha Test is described in U.S. Pat. No. 3,354,078 and in The Journal of Catalysis, Vol. IV, pp. 527-529 (August 1965).

Example 1 - Rejuvenation of Steam-Deactivated Ammonium-Exchanged Ultrastable Zeolite Y

3g of a steamed ammonium-exchanged ultrastable zeolite Y starting material were combined with 100 ml of 3.4 M aqueous ammonium acetate forming a buffered solution whose pH is maintained at a pH slightly higher than the initial pH. The resulting mixture was slurried and heated to 75°C. To this slurry were added slowly 50 ml of a solution 0.02 M in NH$_4$F and 0.04 M in HF. This solution had a pH between 2-4 and the addition was in 1 ml increments over a period of 2 hours. The solution was stirred and allowed to react overnight at 75°C. The final pH of the solution was between 6-7. The product was filtered, exchanged with ammonium nitrate, and calcined at 538°C for 360 minutes in an N$_2$/O$_2$ atmosphere.

The hexane cracking activities of the starting and product samples are respectively given in Tables 1 and 2 below. The treated ultrastable Y samples showed substantial increase in alpha. The ammonium exchange capacity as measured by temperature programmed desorption, thermogravimetric analysis showed a calculated drop in SiO$_2$/Al$_2$O$_3$ molar ratio from 22 to 19 for the parent to product. These data are consistent with aluminum reinsertion into the zeolite.

Table 1

| Hexane Cracking Activities for Untreated Ultrastable Y Zeolite | | | | | | |
|---|---|---|---|---|---|---|
| Catalyst Wt.- 0.0395 Grams | | | | | | |
| Based on 100 Pct. Ash and 100 Pct. Zeolite | | | | | | |
| *Alpha Corrected to 538°C based on -23Kcal/Mole | | | | | | |
| Clock Time (Hr:Min) | Temp Deg C | Flow CC/Min | % Conv | Benzene Selectivity | Alpha Value | Alpha 538°C |
| 0:42 | 536 | 117.63 | 18.46 | 0.00 | 365.5 | 373.3 |
| 0:52 | 536 | 117.01 | 15.59 | 0.53 | 304.2 | 311.8 |
| 1:02 | 536 | 116.59 | 13.91 | 0.65 | 269.4 | 275.1 |
| 1:11 | 536 | 116.28 | 12.94 | 0.70 | 249.6 | 254.9 |
| 1:21 | 537 | 115.99 | 12.10 | 0.75 | 232.6 | 236.8 |
| 1:31 | 537 | 115.73 | 11.45 | 0.81 | 219.7 | 223.6 |

Table 2

| Hexane Cracking Activities for Fluoride Treated Ultrastable Y Zeolite | | | | | | |
|---|---|---|---|---|---|---|
| Catalyst Wt.- 0.400 Grams | | | | | | |
| Based on 100 Pct. Ash and 100 Pct. Zeolite | | | | | | |
| *Alpha Corrected to 538° C Based on -23Kcal/Mole | | | | | | |
| Clock Time (Hr:Min) | Temp Deg C | Flow CC/Min | % Conv | Benzene Selectivity | Alpha Value | Alpha 538° C |
| 22:31 | 538 | 119.61 | 31.41 | 0.29 | 666.7 | 660.9 |
| 22:41 | 537 | 118.32 | 24.15 | 0.39 | 486.9 | 489.5 |
| 22:51 | 537 | 117.68 | 20.99 | 0.46 | 414.8 | 417.0 |
| 23:01 | 537 | 117.20 | 18.93 | 0.50 | 369.3 | 371.3 |
| 23:12 | 538 | 116.82 | 17.55 | 0.52 | 339.5 | 339.5 |
| 23:22 | 538 | 116.48 | 16.48 | 0.57 | 316.9 | 316.9 |

Example 2 - Rejuvenation of a Spent Alumina-Bound ZSM-5 Catalytic Lube Dewaxing Catalyst

3.5 g of an alumina bound ZSM-5 catalyst which had experienced 6 cycles in a catalytic lube dewaxing unit with $H_2/O_2$ regenerations were treated with 57 ml of 0.044 ammonium hydrogen fluoride ($NH_4F.HF$, pH = 4) at 85° C overnight (18 h). The resultant catalyst was ammonium exchanged and calcined.

The alpha of the product was 162 whereas the untreated original catalyst had alpha = 102. Prior to the six cycles of catalytic lube dewaxing the catalyst had an alpha value of 123. Clearly, this spent catalyst was rejuvenated by fluoride treatment.

## Claims

1. A method for activating a catalyst composition comprising a framework aluminum-deficient crystalline aluminosilicate zeolite containing non-framework aluminum which comprises contacting said catalyst composition at a temperature of 20 to 100° C for 0.1 to 48 hours, with a dilute aqueous fluoride solution of from 0.001 to 0.1 N (equivalents of fluoride ion/filter, said solution being essentially free of zeolite framework substituting atoms, wherein said catalyst composition treated by said method has been previously utilized in an organic compound conversion or contacted with steam under conditions sufficient to deactivate said composition by removal of aluminum from said zeolite framework.

2. The method of claim 1 wherein said contacting is at a temperature of from 60 to 95° C for 6 to 18 hours.

3. The method of claim 1 or claim 2 wherein said zeolite has a silica-to-alumina molar ratio of at least 4.

4. The method of any preceding claim wherein said zeolite has a Constraint Index less than 12.

5. The method of claim 4 wherein said zeolite is selected from zeolite Y, Ultrastable Y, zeolite X, and mordenite.

6. The method of claim 4 wherein said zeolite is selected from ZSM-5, ZSM-11, ZSM-12, ZSM-23, ZSM-35, ZSM-48 and zeolite beta.

7. The method of any preceding claim wherein said catalyst composition is a composite of said zeolite and an inorganic oxide matrix.

8. The method of claim 7 wherein said matric comprises alumina.

9. The method of any preceding claim wherein said fluoride solution contacted catalyst composition is contacted with an aqueous ammonium ion solution of from 0.05N to 5N at a temperature of from 20° C to 100° C for from 0.25 to 6 hours.

10. The method of claim 9 wherein said aqueous ammonium ion solution contacted catalyst composition is calcined at a temperature of from 200 to 600° C for 1 minute to 48 hours.

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 4) |
|---|---|---|---|
| A | DE-A-2 010 496 (ESSO) * Page 7, line 7 - page 10, line 21; example 1, pages 15-16; page 18, example 2 * | | B 01 J 29/38 |
| A | EP-A-0 108 611 (THE BRITISH PETROLEUM CO.) * Page 5, line 21 - page 6, line 16 * | | |
| A | EP-A-0 072 920 (BASF) * Claim 4 * | | |
| A | US-A-3 702 312 (W.B. WILSON) | | |
| A | US-A-3 997 474 (J.N. MIALE) | | |
| A | US-A-4 596 704 (J.N. MIALE) | | |

TECHNICAL FIELDS SEARCHED (Int. Cl.4)

B 01 J 29/00

The present search report has been drawn up for all claims

| Place of search | Date of completion of the search | Examiner |
|---|---|---|
| THE HAGUE | 28-09-1988 | DEVISME F.R. |